(19) Europäisches Patentamt
European Patent Office
Office européen des brevets

(11) **EP 2 336 877 B1**

(12) **FASCICULE DE BREVET EUROPEEN**

(45) Date de publication et mention
de la délivrance du brevet:
**19.02.2014 Bulletin 2014/08**

(51) Int Cl.:
***G06F 7/58*** (2006.01)

(21) Numéro de dépôt: **10194675.4**

(22) Date de dépôt: **13.12.2010**

(54) **Carte à puce comportant un générateur de nombre aléatoire sécurisé**

Chipkarte mit sicherem Zufallszahlengenerator

Smart card with secure random number generator

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2009 FR 0958889**

(43) Date de publication de la demande:
**22.06.2011 Bulletin 2011/25**

(73) Titulaire: **Oberthur Technologies
92300 Levallois-Perret (FR)**

(72) Inventeurs:
• **Giraud, Christophe
33600, Pessac (FR)**
• **Chamley, Olivier
33850, Leognan (FR)**

(74) Mandataire: **Delumeau, François Guy et al
Cabinet Beau de Loménie
158, rue de l'Université
75340 Paris Cedex 07 (FR)**

(56) Documents cités:
EP-A1- 1 168 157      EP-A2- 0 388 131
EP-A2- 1 239 363      US-A1- 2007 133 790

• ANDRE SEZNEC ET AL: "HAVEGE: a user-level software heuristic for generating empirically strong random numbers", ACM TRANSACTIONS ON MODELING AND COMPUTER SIMULATION, ACM, NEW YORK, NY, US, vol. 13, no. 4, 1 octobre 2003 (2003-10-01), pages 334-346, XP007914146, ISSN: 1049-3301
• BUCCI M ET AL: "A high-speed oscillator-based truly random number source for cryptographic applications on a smartcard IC", IEEE TRANSACTIONS ON COMPUTERS, IEEE SERVICE CENTER, LOS ALAMITOS, CA, US LNKD- DOI:10.1109/TC.2003.1190581, vol. 52, no. 4, 1 avril 2003 (2003-04-01), pages 403-409, XP011095857, ISSN: 0018-9340
• Wonnjong Kim ET AL: "A Platform-Based SoC Design of a 32-Bit Smart Card", ETRI Journal, Volume 25, Number 6, 1 December 2003 (2003-12-01), XP055046866, [retrieved on 2012-12-06]

**Description**

La présente invention se situe dans le domaine de la sécurisation des générateurs de nombres aléatoires utilisés dans des composants électroniques.

Dans ce document, on désigne par :

- « composant électronique » toute entité physique indépendante qui ne peut être subdivisée sans que sa fonction ne soit détruite ; et par :
- « signal d'horloge interne au composant », un signal d'horloge qui ne peut être observé depuis l'extérieur du composant.

L'invention trouve une application privilégiée, mais non limitative, dans la sécurisation des cartes à puces (ou cartes à microcircuit) conformes à la norme ISO 7816.

Plus précisément, l'invention concerne un composant électronique comportant :

- un processeur cadencé par un signal d'horloge interne à ce composant ;
- un compteur apte à compter un nombre de cycles d'un signal d'une autre horloge; et
- des moyens pour générer un aléa à partir de ce nombre.

Dans un mode particulier de réalisation, cette autre horloge est une horloge externe au composant.

Ainsi, et d'une façon générale, l'invention propose de tirer profit de l'instabilité ou de l'imprécision relative d'une horloge interne, et d'une autre horloge, par exemple externe, pour engendrer un nombre aléatoire.

Par exemple, dans un mode de réalisation particulier de l'invention, le processeur est apte à exécuter un programme d'ordinateur comportant au moins :

- une première instruction pour démarrer le compteur ;
- une deuxième instruction pour arrêter le compteur.

Le processeur étant cadencé par l'horloge interne, le nombre de cycles du signal d'horloge interne pour exécuter une même séquence d'instructions est invariable. Mais il est remarquable de noter que le nombre de cycles d'une autre horloge, par exemple celui d'une horloge externe, peut varier : l'invention utilise ce phénomène pour générer un aléa.

Conformément à l'invention, la taille de l'aléa peut être choisie en fonction du nombre d'instructions s'exécutant entre les première et deuxième instructions précitées.

Le nombre aléatoire obtenu par l'invention peut par exemple être est constitué par le dernier octet du nombre de cycles du signal de l'autre horloge, par exemple externe.

Dans un mode particulier de réalisation de l'invention, le signal d'horloge interne est obtenu à partir du signal de l'autre horloge, les deux signaux devant être dé-corrélés l'un par rapport à l'autre.

En particulier, le signal d'horloge peut être obtenu à partir du signal d'horloge externe, ces signaux étant dé-corrélés l'un par rapport à l'autre.

L'horloge interne peut par exemple être obtenue en combinant l'horloge externe avec un signal aléatoire.

Le signal d'horloge interne peut également être engendré par des moyens internes indépendamment de l'horloge externe. Il peut s'agir d'un signal d'horloge dé-corrélé.

Pour plus de renseignements sur ces modes de réalisation, l'homme du métier peut se reporter au document WO 97 22217.

En variante, le signal d'horloge interne peut être généré par un générateur intégré dans le composant électronique.

Dans un mode particulier de réalisation, le composant électronique selon l'invention comporte des moyens pour combiner l'aléa avec un deuxième aléa généré par ledit composant électronique, pour générer un troisième aléa.

De façon avantageuse, même si les moyens de génération du deuxième aléa sont défectueux, le troisième aléa reste un aléa.

Dans un mode particulier de réalisation, le composant électronique selon l'invention comporte un générateur pseudo-aléatoire, le troisième aléa étant une graine de ce générateur.

Cette graine peut par exemple être obtenue en utilisant une fonction cryptographique dont un paramètre est l'aléa. Cette fonction cryptographique peut être une fonction de type DES.

L'invention vise également une carte à puce conforme à la norme ISO 7816 comportant un microcontrôleur constitué par un composant électronique tel que mentionné ci-dessus, ce composant comportant des connecteurs aptes à obtenir le signal d'horloge externe à partir d'un lecteur de cette carte.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente une carte à puce conforme à un mode particulier de réalisation de l'invention ;
- la figure 2 représente un signal externe à la carte à puce de la figure 1.

Description détaillée d'un premier mode de réalisation

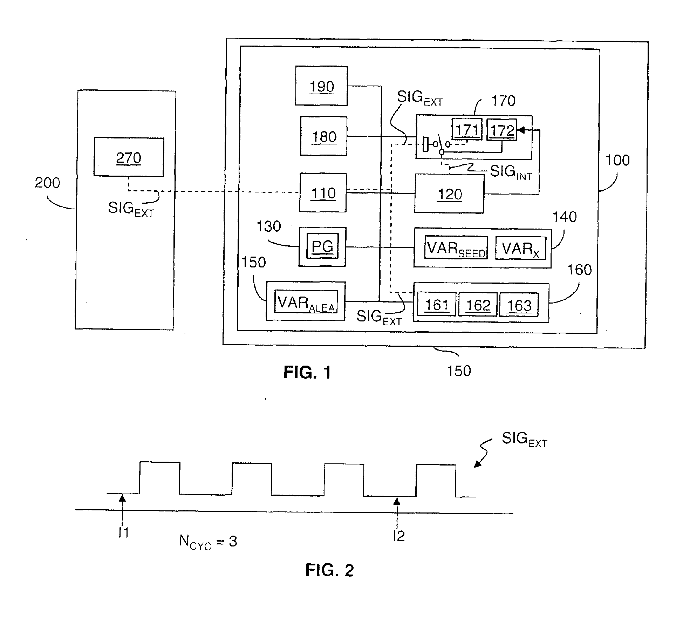

La figure 1 représente une carte à puce 150 conforme à l'invention et un lecteur 200 de cette carte à puce.
La carte à puce 150 est conforme à la norme ISO7816. Elle comporte un microcontrôleur 100 conforme à l'invention, celui-ci comportant notamment, un processeur 120, une mémoire morte de type ROM 130, une mémoire non volatile réinscriptible 140 de type EEPROM 140 et une mémoire vive de type RAM 150.
Le microcontrôleur 100 comporte aussi un module d'entrée sortie 110 dont des contacts affleurant constituent l'interface avec le lecteur 200.
Dans le mode de réalisation décrit ici, le microcontrôleur 100 comporte un générateur de nombre aléatoire matériel 180.
Dans le mode de réalisation décrit ici, au moment de la mise sous tension de la carte à puce 100, le générateur de nombre aléatoire matériel 180 est utilisé pour remplir un tampon (en anglais « buffer ») $BUFFER_{180}$ et pour calculer une première valeur de graine, mémorisée dans une variable $VAR_{SEED}$ mémorisée dans un registre de la mémoire EEPROM 140.
Dans le mode de réalisation décrit ici, la variable $VAR_{SEED}$ est calculée en utilisant un algorithme de chiffrement de type DES (Data Encryption Standard) :

$$VAR_{SEED} = DES(VAR_{SEED}, BUFFER_{180})$$

Nous allons maintenant décrire comment l'invention peut être utilisée pour calculer un aléa permettant de diversifier la graine $VAR_{SEED}$.
Le processeur 120 du microcontrôleur 100 est cadencé par un signal $SIG_{INT}$ fourni par une horloge interne 170.
Dans le mode de réalisation décrit ici, la fréquence de l'horloge interne 170 est de 30 MHz. Autrement dit, le signal $SIG_{INT}$ généré par l'horloge interne comporte 30 cycles par seconde.
Dans le mode de réalisation décrit ici, le signal $SIG_{INT}$ généré par l'horloge interne 170 peut :

- soit être généré par un générateur électronique 171 intégré dans l'horloge interne 170 ;
- soit être obtenu à partir d'un signal $SIG_{EXT}$ fourni par une autre horloge, à savoir dans cet exemple par une horloge externe 270 du lecteur 200, via le module d'entrée/sortie 110.

Dans un mode préféré de réalisation, le microcontrôleur 100 n'implémente que l'un de ces deux modes.
En variante, le choix entre ces deux modes peut être défini par l'écriture d'une valeur déterminée dans un registre 161 du compteur 160 et par un moyen de sélection 172 de l'horloge interne 170.
Conformément à l'invention, le microcontrôleur 100 comporte un compteur 160 apte, sur instruction du processeur 120, à compter les cycles du signal $SIG_{EXT}$ généré par l'horloge externe 270.
Dans le mode de réalisation décrit ici, le compteur 160 reçoit directement le signal $SIG_{EXT}$ Il comporte deux registres 162, 163, accessibles respectivement en écriture et en lecture par le processeur 120 tels que :

- l'écriture d'une première valeur (« 0 ») dans le registre 162 initialise et démarre le comptage des cycles du signal de l'horloge externe 270 par le compteur 160, l'écriture d'une deuxième valeur (« 1 ») dans ce registre arrêtant ce comptage ;
- la lecture du registre 163 permet d'obtenir le nombre de cycles du signal $SIG_{EXT}$ de l'horloge externe 270 depuis la dernière écriture de la valeur « 0 » dans le registre 162.

Dans le mode de réalisation décrit ici, le registre 163 est aussi accessible en écriture par le processeur 120 et initialisé à zéro à la mise sous tension de la carte à puce 100.
Dans le mode de réalisation décrit ici, la mémoire morte de type ROM 130 mémorise un programme d'ordinateur PG exécutable par le processeur 120. La mémoire vive 150 de type RAM comporte des registres permettant l'exécution de ce programme.

Ce programme d'ordinateur comporte notamment:

- une première instruction pour écrire la valeur « 0 » dans le registre 162 afin de démarrer le comptage des cycles de l'horloge externe 270 par le compteur 160 ;
- une deuxième instruction pour écrire la valeur « 1 » dans le registre 162 afin d'arrêter ce comptage ; et
- une instruction pour lire le contenu du registre 163 afin d'obtenir le nombre de cycles du signal $SIG_{EXT}$ généré par l'horloge externe entre l'exécution des première et deuxième instructions.

La figure 2 représente un exemple de signal extérieur $SIG_{EXT}$ pouvant être généré par l'horloge externe 270 et les instants auxquels le processeur 120 exécute la première instruction I1 et la deuxième instruction I2. Dans cet exemple le nombre de cycles $N_{CYC}$ entre les deux instructions I1 et I2 est égal à 3.

Comme mentionné précédemment, ce nombre de cycles $N_{CYC}$ est variable même si le nombre de cycles de l'horloge interne 170 est identique pour deux exécutions identiques d'une même série d'instructions de programme d'ordinateur par le processeur 120.

Conformément à l'invention, le nombre de cycles de l'horloge externe 270 lu dans le registre 163 est utilisé pour générer un aléa.

Bien entendu, plus le nombre d'instructions exécutées par le processeur 120 entre l'exécution de la première instruction et l'exécution de la deuxième instruction est important, plus l'entropie de cet aléa sera grande.

Préférentiellement, le nombre d'instructions exécutées entre les première et deuxième instructions I1, I2 représente plus de cent mille cycles de l'horloge interne 170.

Dans le mode de réalisation décrit ici, on exécute des instructions représentant environ un million de cycles de signal d'horloge interne 170 pour générer un octet d'aléa dans le registre 163.

Dans le mode de réalisation décrit ici, on utilise comme aléa le dernier octet du nombre lu dans le registre 163.

Dans le mode de réalisation décrit ici, cet aléa, à savoir le dernier octet du nombre lu dans le registre 163 est mémorisé dans une variable $VAR_{ALEA}$ de la mémoire vive de type RAM 150.

Dans le mode de réalisation décrit ici, cet aléa est utilisé pour diversifier la graine $VAR_{SEED}$ en utilisant l'algorithme DES :

$$VAR_{SEED} = DES(VAR_{SEED} , BUFFER_{180} {}^{\wedge} VAR_{ALEA})$$

Dans le mode de réalisation décrit ici, la mémoire EEPROM 140 comporte en outre un registre comportant une constante $VAR_x$ choisie en fonction de l'entropie de la variable $VAR_{SEED}$ et la variable $VAR_{SEED}$ est rediversifiée une fois sur $VAR_x$.

Dans le mode de réalisation décrit ici, la graine $VAR_{SEED}$ est utilisée comme graine d'un générateur 190 de nombre pseudo-aléatoire de la carte à puce 100.

Des tests ont été effectués avec un microcontrôleur 100 constitué par un composant SAMSUNG (marque déposée) de référence S3FS9TH : sur 10 000 obtentions de la variable $VAR_{ALEA}$, les résultats suivants ont été obtenus :

- nombre d'éléments différents: 255
- moyenne = 0x64
- min = 0x00
- max = 0xff
- variance = 87.82

La variable aléatoire $VAR_{ALEA}$ peut par exemple être utilisée pour définir un nombre d'itérations d'une boucle d'un programme informatique. L'exécution d'une boucle comportant un nombre aléatoire d'instructions renforce la sécurité de la carte à puce 150, car elle engendre, pour un observateur extérieur à la carte, entre deux exécutions, un décalage entre les opérations sensibles effectuées par cette carte.

**Revendications**

1. Composant électronique (100) comportant :

- un processeur (120) cadencé par un signal d'horloge interne ($SIG_{INT}$) audit composant ;
- un compteur (160) apte à compter un nombre de cycles ($N_{CYC}$) d'un signal ($SIG_{EXT}$) d'une autre horloge ;
- des moyens (120) pour générer un aléa ($VAR_{ALEA}$) à partir dudit nombre, ledit composant électronique (100) étant **caractérisé en ce que** ladite autre horloge est externe audit composant.

2. Composant électronique (100) selon la revendication 1, **caractérisé en ce qu'**il comporte un générateur (171) apte à générer ledit signal d'horloge interne ($SIG_{INT}$).

3. Composant électronique (100) selon l'une quelconque des revendications 1 à 2, **caractérisé en ce que** ledit processeur (120) est apte à exécuter un programme d'ordinateur comportant au moins :

- une première instruction (I1) pour démarrer ledit compteur (160) ;
- une deuxième instruction (I2) pour arrêter ledit compteur (160) ;
et un nombre d'instructions entre lesdites première (I1) et deuxième (I2) instructions, ce nombre étant choisi en fonction de l'entropie souhaitée dudit aléa ($VAR_{ALEA}$).

4. Composant électronique (100) selon la revendication 3, **caractérisé en ce que** ledit programme d'ordinateur comportant en outre un nombre d'instructions entre lesdites première (I1) et deuxième (I2) instructions, ce nombre étant choisi en fonction de la taille souhaitée dudit aléa ($VAR_{ALEA}$).

5. Composant électronique (100) selon la revendication 3, **caractérisé en ce que** ledit nombre instructions entre lesdites première (I1) et deuxième (I2) instructions représente plus de cent mille cycles d'horloge interne.

6. Composant électronique (100) selon l'une quelconque des revendications 1 à 5, **caractérisé en ce que** ledit aléa ($VAR_{ALEA}$) est constitué par les derniers bits, par exemple par le dernier octet, dudit nombre de cycles ($N_{CYC}$).

7. Composant électronique (100) selon l'une quelconque des revendications 1 à 6, **caractérisé en ce qu'**il comporte un générateur pseudo-aléatoire (190), ledit aléa ($VAR_{ALEA}$) étant utilisé pour calculer une graine ($VAR_{SEED}$) de ce générateur (190).

8. Composant électronique (100) selon la revendication 7, **caractérisé en ce que** ladite graine ($VAR_{SEED}$) est obtenu en utilisant une fonction cryptographique dont un paramètre est ledit aléa ($VAR_{ALEA}$).

9. Composant électronique (100) selon la revendication 8, **caractérisé en ce que** ladite fonction cryptographique est une fonction de type DES.

10. Microcontrôleur (100) de carte à puce (150) constitué par un composant électronique (100) selon l'une quelconque des revendications 1 à 9.

11. Carte à puce (150) conforme à la norme ISO 7816 comportant un microcontrôleur (100) constitué par un composant électronique selon l'une quelconque des revendications 1 à 10, ce composant comportant des connecteurs (110) aptes à obtenir ledit signal d'horloge externe ($SIG_{EXT}$) à partir d'un lecteur (200) de ladite carte.

12. Carte à puce (150) selon la revendication 11, **caractérisée en ce qu'**elle comporte des moyens pour exécuter une boucle dont le nombre d'itérations est obtenu à partir dudit aléa ($VAR_{ALEA}$).


**Patentansprüche**

1. Elektronisches Bauelement (100), umfassend:

- einen Prozessor (120), der durch ein bauelementinternes Taktsignal ($SIG_{INT}$) getaktet wird;
- einen Zähler (160), der geeignet ist, eine Anzahl von Zyklen ($N_{CYC}$) eines Signals ($SIG_{EXT}$) eines weiteren Taktgebers zu zählen;
- Mittel (120), um anhand der Anzahl eine Zufallszahl ($VAR_{ALEA}$) zu generieren, wobei das elektronische Bauelement (100) **dadurch gekennzeichnet ist, dass** der weitere Taktgeber sich außerhalb des Bauelements befindet.

**2.** Elektronisches Bauelement (100) nach Anspruch 1, **dadurch gekennzeichnet, dass** es einen Generator (171) umfasst, der geeignet ist, das interne Taktsignal (SIG$_{INT}$) zu erzeugen.

**3.** Elektronisches Bauelement (100) nach einem der Ansprüche 1 bis 2, **dadurch gekennzeichnet, dass** der Prozessor (120) geeignet ist, ein Computerprogramm auszuführen, das wenigstens umfasst:

- einen ersten Befehl (11), um den Zähler (160) zu starten;
- einen zweiten Befehl (12), um den Zähler (160) anzuhalten;

sowie eine Anzahl von Befehlen zwischen dem ersten Befehl (11) und dem zweiten Befehl (12), wobei diese Anzahl in Abhängigkeit von der gewünschten Entropie der Zufallszahl (VAR$_{ALEA}$) gewählt ist.

**4.** Elektronisches Bauelement (100) nach Anspruch 3, **dadurch gekennzeichnet, dass** das Computerprogramm ferner eine Anzahl von Befehlen zwischen dem ersten Befehl (I1) und dem zweiten Befehl (12) umfasst, wobei diese Anzahl in Abhängigkeit von der gewünschten Größe der Zufallszahl (VAR$_{ALEA}$) gewählt ist.

**5.** Elektronisches Bauelement (100) nach Anspruch 3, **dadurch gekennzeichnet, dass** die Anzahl von Befehlen zwischen dem ersten Befehl (I1) und dem zweiten Befehl (I2) mehr als hunderttausend Zyklen eines internen Taktgebers darstellt.

**6.** Elektronisches Bauelement (100) nach einem der Ansprüche 1 bis 5, **dadurch gekennzeichnet, dass** die Zufallszahl (VAR$_{ALEA}$) durch die letzten Bits, beispielsweise durch das letzte Byte, der Anzahl von Zyklen (N$_{CYC}$) gebildet ist.

**7.** Elektronisches Bauelement (100) nach einem der Ansprüche 1 bis 6, **dadurch gekennzeichnet, dass** es einen Pseudozufallsgenerator (190) umfasst, wobei die Zufallszahl (VAR$_{ALEA}$) verwendet wird, um einen Startwert (VAR$_{SEED}$) dieses Generators (190) zu berechnen.

**8.** Elektronisches Bauelement (100) nach Anspruch 7, **dadurch gekennzeichnet, dass** der Startwert (VAR$_{SEED}$) unter Verwendung einer Verschlüsselungsfunktion, von welcher ein Parameter die Zufallszahl (VAR$_{ALEA}$) ist, erhalten wird.

**9.** Elektronisches Bauelement (100) nach Anspruch 8, **dadurch gekennzeichnet, dass** die Verschlüsselungsfunktion eine Funktion vom Typ DES ist.

**10.** Mikrocontroller (100) einer Chipkarte (150), der durch ein elektronisches Bauelement (100) nach einem der Ansprüche 1 bis 9 gebildet ist.

**11.** Chipkarte (150) gemäß ISO-Norm 7816, umfassend einen Mikrocontroller (100), der durch ein elektronisches Bauelement nach einem der Ansprüche 1 bis 9 gebildet ist, wobei dieses Bauelement Verbinder (110) umfasst, die geeignet sind, das externe Taktsignal (SIG$_{EXT}$) mittels eines Gerätes zum Lesen (200) der Karte zu erhalten.

**12.** Chipkarte (150) nach Anspruch 11, **dadurch gekennzeichnet, dass** sie Mittel umfasst, um eine Schleife auszuführen, deren Anzahl von Iterationen anhand der Zufallszahl (VAR$_{ALEA}$) erhalten wird.


**Claims**

**1.** An electronic component (100) comprising:

· a processor (120) clocked by a clock signal (SIG$_{INT}$) that is internal to said component;
· a counter (160) suitable for counting a number of cycles (N$_{CYC}$) of a signal (SIG$_{EXT}$) from another clock; and
· means (120) for generating a random number (VAR$_{ALEA}$) from said number;
said electronic component (100) being **characterized in that** said other clock is external to said component.

**2.** An electronic component (100) according to claim 1, **characterized in that** it includes a generator (171) suitable for generating said internal clock signal (SIG$_{INT}$).

**3.** An electronic component (100) according to claim 1 or claim 2, **characterized in that** said processor (120) is suitable for executing a computer program comprising at least:

· a first instruction (I1) for starting said counter (160);

· a second instruction (12) for stopping said counter (160); and

· a number of instructions between said first and second instructions (I1, 12), this number being selected as a function of the entropy desired for said random number ($VAR_{ALEA}$).

4. An electronic component (100) according to claim 3, **characterized in that** said computer program further includes a number of instructions between said first and second instructions (I1, 12), said number being selected as a function of the size desired for said random number ($VAR_{ALEA}$).

5. An electronic component (100) according to claim 3, **characterized in that** said number of instructions between said first and second instructions (I1, 12) represents more than one hundred thousand cycles of the internal clock.

6. An electronic component (100) according to any one of claims 1 to 5, **characterized in that** said random number ($VAR_{ALEA}$) is constituted by the last bits, e.g. the last eight-bit byte, of said number of cycles ($N_{CYC}$).

7. An electronic component (100) according to any one of claims 1 to 6, **characterized in that** it includes a pseudo-random generator (190), said random number ($VAR_{ALEA}$) being used to calculate a seed ($VAR_{SEED}$) for said generator (190).

8. An electronic component (100) according to claim 7, **characterized in that** said seed ($VAR_{SEED}$) is obtained by using a cryptographic function having said random number ($VAR_{ALEA}$) as a parameter.

9. An electronic component (100) according to claim 8, **characterized in that** said cryptographic function is a function of the DES type.

10. A microcontroller (100) for a smart card (150) constituted by an electronic component (100) according to any one of claims 1 to 9.

11. A smart card (150) in accordance with the ISO 7816 standard and including a microcontroller (100) constituted by an electronic component according to any one of claims 1 to 10, the component including connectors (110) suitable for obtaining said external clock signal ($SIG_{EXT}$) from a reader (200) of said card.

12. A smart card (150) according to claim 11, **characterized in that** it includes means for executing a loop in which the number of iterations is obtained from said random number ($VAR_{ALEA}$).

**FIG. 1**

**FIG. 2**

8

**EP 2 336 877 B1**

## RÉFÉRENCES CITÉES DANS LA DESCRIPTION

**Documents brevets cités dans la description**

- WO 9722217 A